# EUROPEAN PATENT APPLICATION

(11) **EP 4 803 775 A1**
(43) Date of publication of application: **09.09.2026**
(21) Application number: 24885771.6
(22) Date of filing: 30.10.2024
(51) Int. Cl.: F16F 15/08, F04B 39/00, F16F 1/36

(54) **VIBRATION-PROOFING MEMBER AND SUPPORT STRUCTURE OF COMPRESSOR**

(30) Priority: 31.10.2023 JP 2023186950
(71) Applicant: Yamauchi Corporation, Hirakata-shi, Osaka 573-1132 (JP)
(72) Inventor: WADA, Masahiro, Hirakata-shi, Osaka 573-1132 (JP)
(74) Representative: Müller Hoffmann & Partner
(86) International application number: PCT/JP2024/038722
(87) International publication number: WO 2025/095004

(57) **Abstract**

A vibration isolation member 12 is made of an elastic material and has a through-hole penetrating the vibration isolation member in an axial direction Z. The vibration isolation member 12 has a neck portion 20 and a body portion 24. The body portion 24 has a plurality of thick-walled portions 40 and a plurality of thin-walled portions 42. When viewed in the axial direction Z, the length of protrusion of the thin-walled portions 42 relative to the neck portion 20 in the radial direction of the through-hole 12a is smaller than the length of protrusion of the thick-walled portions 40 relative to the neck portion 20. When viewed in the axial direction Z, the plurality of thick-walled portions 40 and the plurality of thin-walled portions 42 are alternately arranged around the axis of the body portion 24.

## Description

### TECHNICAL FIELD

The present invention relates to a vibration isolation member and a support structure of a compressor.

### BACKGROUND ART

For refrigerators and air conditioning equipment (referred to as a refrigerator or the like, hereinafter), for example, support structures for preventing vibrations occurring in a compressor from being transmitted to other members (such as a housing) of the refrigerator or the like have been proposed. For example, Patent Document 1 discloses a support device that supports a compressor with a plurality of support bodies. Patent Document 1 discloses that the plurality of support bodies of the support device is made of an elastic material in order to absorb the vibrations of the compressor.

### LIST OF PRIOR ART DOCUMENTS

### PATENT DOCUMENT

Patent Document 1: JP2002-235665A

### SUMMARY OF INVENTION

### TECHNICAL PROBLEM

To reduce the production cost of the support device described above, for example, the volume of each support body can be reduced to reduce the material cost. However, if the dimensions of the support body are simply reduced, the vibration isolation function deteriorates.

In view of this, an object of the present invention is to provide a vibration isolation member that can maintain the vibration isolation function while having a reduced volume and a support structure provided with the same.

### SOLUTION TO PROBLEM

The inventor has made the following investigations as to a configuration for maintaining the vibration isolation function of a vibration isolation member while reducing the volume of the vibration isolation member.

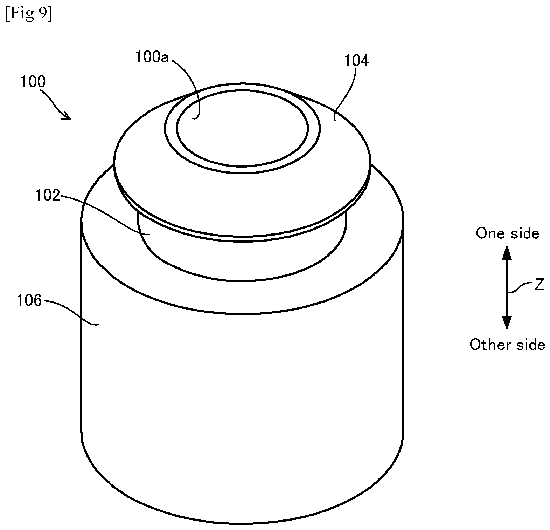

Figure 9 is an exterior perspective view of a conventional vibration isolation member. A conventional vibration isolation member 100 shown in Figure 9 is made of an elastic material. In the vibration isolation member 100, a through-hole 100a penetrating the vibration isolation member 100 in an axial direction Z is formed.

The vibration isolation member 100 has a neck portion 102, a jaw portion 104 and a body portion 106. The neck portion 102 has a circular tubular shape. The jaw portion 104 is provided on one side of the neck portion 102 in the axial direction Z. The jaw portion 104 has an annular shape and protrudes relative to the neck portion 102 in a radial direction of the through-hole 100a. The body portion 106 has a circular tubular shape and is provided on the other side of the neck portion 102 in the axial direction Z.

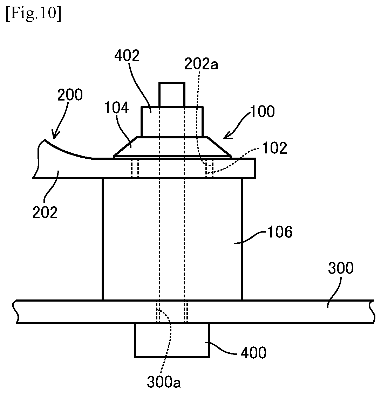

Figure 10 is a diagram showing a use case of the vibration isolation member shown in Figure 9. Figure 10 shows not only the vibration isolation member 100 but also a part of a compressor 200. Specifically, one of a plurality of attaching legs 202 of the compressor 200 is shown.

As shown in Figure 10, the vibration isolation member 100 is used to support the compressor 200 on a base 300 of a refrigerator or the like. In the example shown in Figure 10, the neck portion 102 of the vibration isolation member 100 is fitted in an attaching hole 202a formed in the attaching leg 202. In this state, a bolt 400 is inserted from below the base 300 into an attaching hole 300a formed in the base 300 and the through-hole 100a (see Figure 9) of the vibration isolation member 100, and a nut 402 is fitted onto a tip end portion of the bolt 400. As the nut 402 is fastened, the jaw portion 104 presses the attaching leg 202 against the body portion 106 and presses the body portion 106 against the base 300. Such a vibration isolation member 100 is attached to each of the plurality of attaching legs 202 of the compressor 200 in the same manner. Thus, the compressor 200 is elastically supported on the base 300 by a plurality of vibration isolation members 100, and a vibration occurring in the compressor 200 can be prevented from being transmitted to the base 300.

The inventor tried to reduce the volume of the vibration isolation member 100 described above by reducing the outer diameter of the body portion 106. However, it was found that if the outer diameter of the body portion 106 is reduced, the vibration isolation function deteriorates.

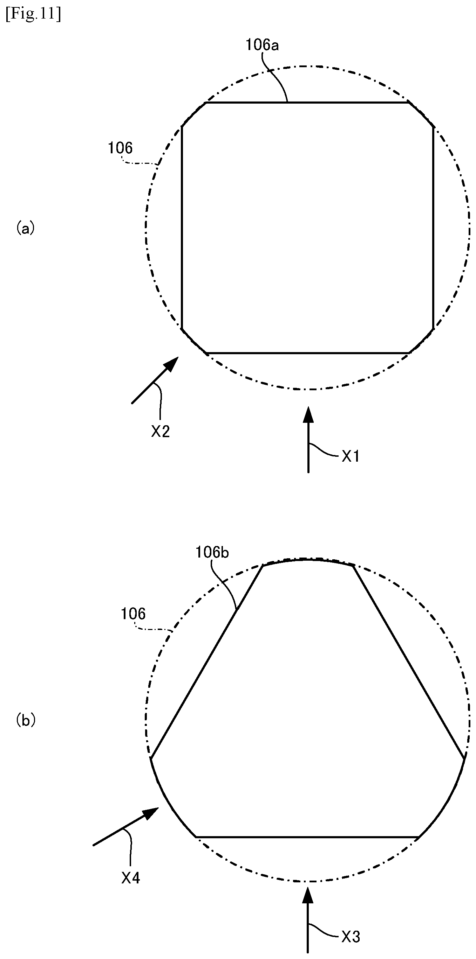

Then, the inventor tried to reduce the volume of the body portion while maintaining a sufficient diameter of a circle circumscribing the body portion viewed in the axial direction. Figure 11 is a diagram for illustrating the shapes of the body portions examined by the inventor. Note that Figure 11 shows the shape of an outer edge of the body portion viewed from one side in the axial direction of the vibration isolation member. In addition, in Figure 11, the alternate long and short dash lines indicate the shape of the outer edge of the body portion 106 of the vibration isolation member 100 shown in Figure 9, and the solid line indicates the shape of the outer edge of the body portions 106a and 106b reduced in volume compared with the body portion 106.

The inventor first investigated the body portion 106a whose outer peripheral edge has a substantially rectangular shape as shown in Figure 11(a). In this case, the body portion 106a has a sufficiently reduced volume compared with the body portion 106 while maintaining the diameter of the circle circumscribing the body portion 106a to be substantially the same as the diameter of the body portion 106.

In addition, the inventor evaluated, by experiment, the vibration isolation member 100 having the body portion 106 and the vibration isolation member having the body portion 106a in terms of vibration transmission properties (vibration isolation properties) in the axial direction and a direction perpendicular to the axial direction. The result showed that the vibration isolation member 100 having the body portion 106 and the vibration isolation member having the body portion 106a were not significantly different in vibration transmission properties. That is, the vibration-proof function of the vibration isolation member was able to be maintained while reducing the volume of the vibration isolation member. With regard to the direction perpendicular to the axial direction, the vibration transmission properties were evaluated in two directions indicated by the arrows X1 and X2 in Figure 11(a). The result showed that there was no significant difference in vibration transmission properties between the vibration directions. This result shows that the vibration isolation member having the body portion 106a can properly deliver the vibration isolation function regardless of the direction of attachment to the compressor 200 (attaching leg 202).

The inventor then investigated the body portion 106b whose outer peripheral edge has a substantially triangular shape as shown in Figure 11(b). The inventor also evaluated, by experiment, the vibration isolation member having the body portion 106b in terms of vibration transmission properties (vibration isolation properties) in the axial direction and a direction perpendicular to the axial direction. The result showed that the vibration isolation member 100 having the body portion 106 and the vibration isolation member having the body portion 106b were not significantly different in vibration transmission properties. That is, the vibration-proof function of the vibration isolation member was able to be maintained while further reducing the volume of the body portion 106b compared with the body portion 106. With regard to the direction perpendicular to the axial direction, the vibration transmission properties were evaluated in two directions indicated by the arrows X3 and X4 in Figure 11(b). The result showed that there was no significant difference in vibration transmission properties between the vibration directions. This shows that the vibration isolation member having the body portion 106b can also properly deliver the vibration isolation function regardless of the direction of attachment to the compressor 200 (attaching leg 202).

The present invention is devised based on the findings described above.
(1) A vibration isolation member according to an embodiment of the present invention is a vibration isolation member made of an elastic material and having a hollow shape with a through-hole penetrating the vibration isolation member in an axial direction formed therein, comprising:
   a body portion having a tubular shape; and
   a neck portion having a tubular shape provided on one side of the body portion in the axial direction,
   wherein when viewed in the axial direction, the body portion has a plurality of thick-walled portions provided to protrude in a radial direction of the through-hole relative to the neck portion and a plurality of thin-walled portions, a length of protrusion of the thin-walled portions relative to the neck portion in the radial direction being smaller than a length of protrusion of the thick-walled portions relative to the neck portion in the radial direction, and
   when viewed in the axial direction, the plurality of thick-walled portions and the plurality of thin-walled portions are alternately arranged around an axis of the body portion.
(2) When viewed in the axial direction, the plurality of thick-walled portions and the plurality of thin-walled portions may be alternately arranged at intervals of 45° or 60° around the axis of the body portion.
(3) When viewed in the axial direction, the body portion may be in contact with an imaginary circle at tip end portions of the plurality of thick-walled portions in the radial direction.
(4) When viewed in the axial direction, tip end portions of the thick-walled portions in the radial direction may be shaped to form a rounded face or a chamfer face.
(5) When viewed in the axial direction, the body portion may have a shape of a rectangle or a rectangle with each vertex shaped to form a rounded face or a chamfer face.
(6) When viewed in the axial direction, the body portion may have a shape of a triangle or a triangle with each vertex shaped to form a rounded face or a chamfer face.
(7) The vibration isolation member may further comprise a jaw portion having an annular shape, the jaw portion being provided on the one side of the neck portion in the axial direction and protruding relative to the neck portion in the radial direction.
(8) A support structure according to an embodiment of the present invention is a support structure for supporting a compressor on a base, the compressor having a plurality of attaching legs,
   wherein the plurality of attaching legs is supported on the base by a plurality of the vibration isolation members.

### ADVANTAGEOUS EFFECTS OF INVENTION

According to the present invention, the vibration isolation function of the vibration isolation member can be maintained while reducing the volume of the vibration isolation member.

### BRIEF DESCRIPTION OF DRAWINGS

[Figure 1]

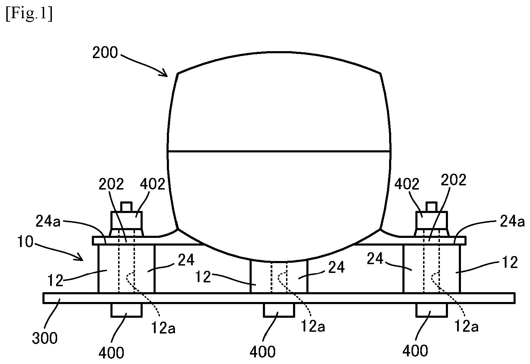

   Figure 1 is a schematic diagram showing a support structure according to an embodiment of the present invention.
[Figure 2]

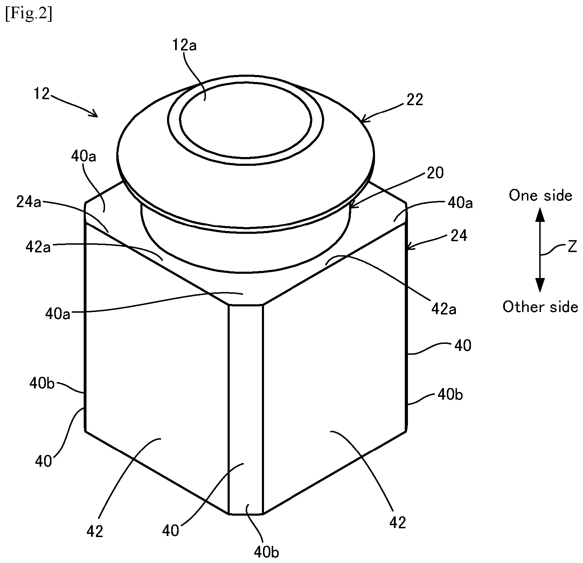

   Figure 2 is an exterior perspective view of a vibration isolation member according to an embodiment of the present invention.
[Figure 3]

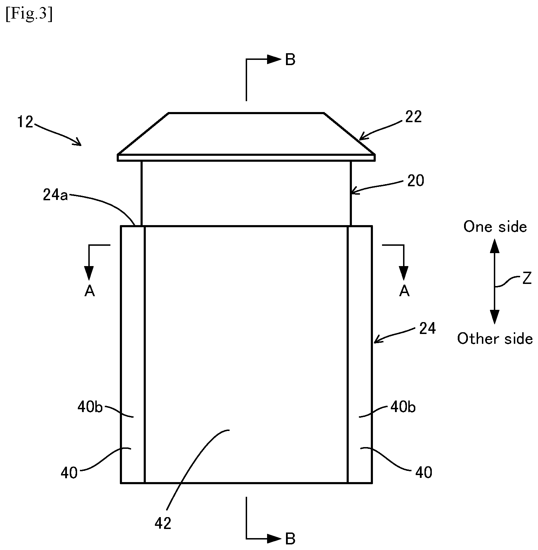

   Figure 3 is a front view of the vibration isolation member shown in Figure 2.
[Figure 4]

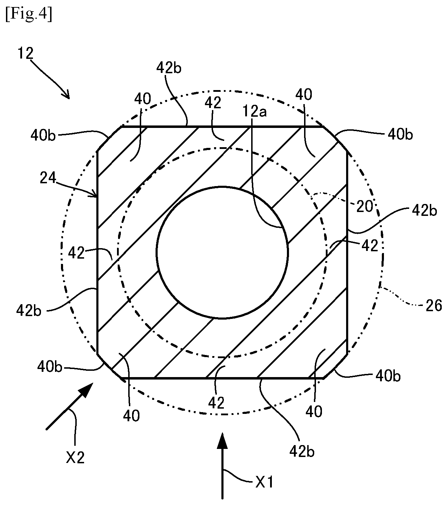

   Figure 4 is a cross-sectional view of the vibration isolation member taken along the line A-A in Figure 3.
[Figure 5]

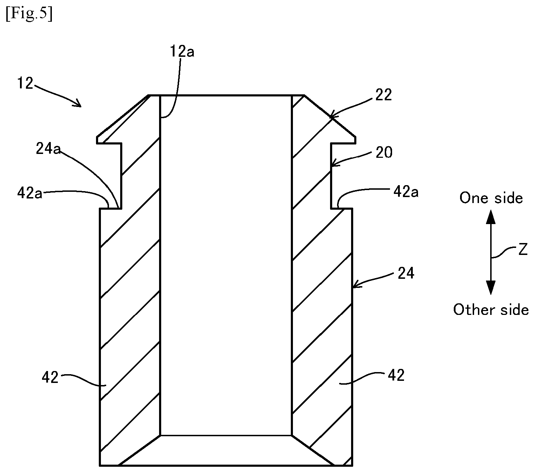

   Figure 5 is a cross-sectional view of the vibration isolation member taken along the line B-B in Figure 3.
[Figure 6]

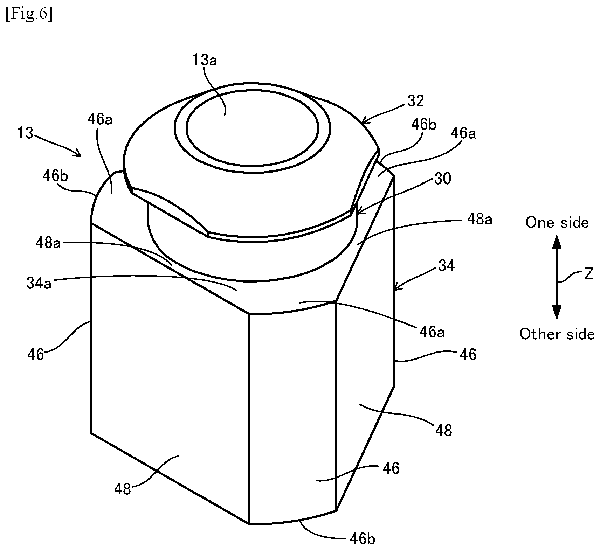

   Figure 6 is an exterior perspective view of a vibration isolation member according to another embodiment of the present invention.
[Figure 7]

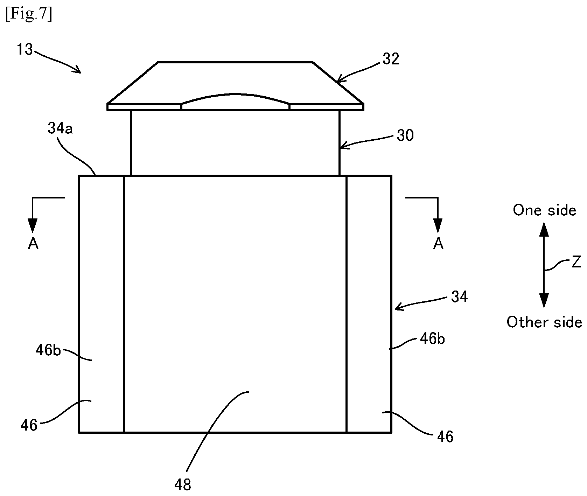

   Figure 7 is a front view of the vibration isolation member.
[Figure 8]

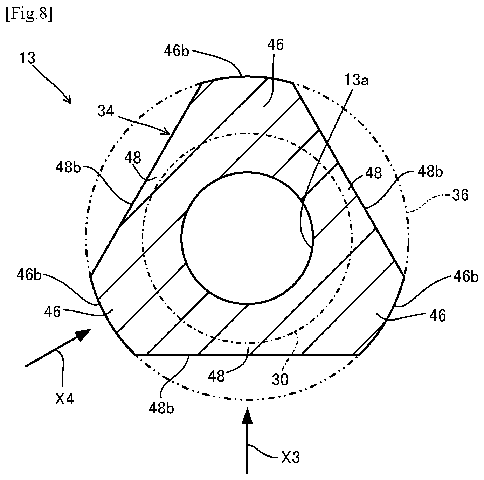

   Figure 8 is a cross-sectional view of the vibration isolation member taken along the line A-A in Figure 7.
[Figure 9]
   Figure 9 is an exterior perspective view of a conventional vibration isolation member.
[Figure 10]
   Figure 10 is a diagram showing a use case of the vibration isolation member shown in Figure 9.
[Figure 11]
   Figure 11 is a diagram for illustrating the shapes of the body portions examined by the inventor.

### DESCRIPTION OF EMBODIMENTS

In the following, a vibration isolation member and a support structure of a compressor according to embodiments of the present invention will be described with reference to the drawings. Figure 1 is a schematic diagram showing a support structure according to an embodiment of the present invention, and Figure 2 is an exterior perspective view of a vibration isolation member according to an embodiment of the present invention. Figure 3 is a front view of the vibration isolation member, Figure 4 is a cross-sectional view of the vibration isolation member taken along the line A-A in Figure 3, and Figure 5 is a cross-sectional view of the vibration isolation member taken along the line B-B in Figure 3.

As shown in Figure 1, a support structure 10 according to this embodiment is provided to support a compressor 200 on a base 300. The support structure 10 includes a plurality of (three, in this embodiment) vibration isolation members 12 corresponding to a plurality of attaching legs 202 of the compressor 200. Each vibration isolation member 12 is made of an elastic material, such as rubber. As the material of the vibration isolation member 12, various kinds of rubber can be used. Specifically, as the material of the vibration isolation member 12, one or more selected from the group consisting of isobutylene-isoprene copolymer rubber (IIR), natural rubber (NR), isoprene rubber (IR), butadiene rubber (BR), styrene-butadiene copolymer rubber (SBR), acrylonitrile-butadiene copolymer rubber (NBR) and ethylene-propylene copolymer rubber can be preferably used. In particular, the material of the vibration isolation member 12 preferably contains isobutylene-isopropylene copolymer rubber (IIR) having high vibration isolation properties. The same holds true for the embodiments described later.

In the vibration isolation member 12, a through-hole 12a penetrating the vibration isolation member 12 in an axial direction Z (see Figure 2) is formed. A bar-shaped member (such as a bolt) for fixing the vibration isolation member 12 is inserted into the through-hole 12a. In this embodiment, each vibration isolation member 12 is attached to a base 300 and an attaching leg 202 with a bolt 400 and a nut 402 and supports a compressor 200 on the base 300, similarly to the vibration isolation member 100 described above.

As shown in Figures 2 to 5, the vibration isolation member 12 has a neck portion 20, a jaw portion 22 and a body portion 24. The neck portion 20 has a tubular shape (a circular tubular shape in this embodiment). The jaw portion 22 is provided on one side of the neck portion 20 in the axial direction Z of the vibration isolation member 12. The jaw portion 22 has an annular shape and protrudes relative to the neck portion 20 in a radial direction of the through-hole 12a. In this embodiment, the jaw portion 22 is shaped to be tapered so that the diameter decreases as it goes to the one side in the axial direction Z.

The body portion 24 is provided on another side of the neck portion 20 in the axial direction Z of the vibration isolation member 12. The body portion 24 has a tubular shape (a square tubular shape in this embodiment). Note that although the through-hole 12a has a circular cross section in this embodiment, the cross-sectional shape of the through-hole 12a is not limited to a circular shape. When the cross-sectional shape of the through-hole 12a is not a circular shape, the radial direction of the through-hole 12a means a radial direction of an imaginary circle centered on the center of the through-hole 12a viewed in the axial direction Z. The same holds true for the embodiments described later. In the following, the radial direction of the through-hole 12a will be referred to simply as the radial direction. Note that in Figure 4, the alternate long and short dash line indicates the position of an outer edge of the neck portion 20 viewed in the axial direction Z, and the alternate long and two short dashes line indicates an imaginary circle 26 circumscribing the body portion 24. In this embodiment, the imaginary circle 26 is a circle centered on the center of the through-hole 12a viewed in the axial direction Z.

As shown in Figures 2 and 4, the body portion 24 has a plurality of thick-walled portions 40 and a plurality of thin-walled portions 42. When viewed in the axial direction Z, the length of protrusion of the thin-walled portion 42 relative to the neck portion 20 in the radial direction (thickness of the thin-walled portion 42 in the radial direction) is smaller than the length of protrusion of the thick-walled portion 40 relative to the neck portion 20 in the radial direction (thickness of the thick-walled portion 40 in the radial direction). The plurality of thick-walled portions 40 and the plurality of thin-walled portions 42 are alternately arranged around the axis of the body portion 24. In this embodiment, the plurality of thick-walled portions 40 and the plurality of thin-walled portions 42 are provided at intervals of 45° about the axis of the body portion 24. Note that in this embodiment, as shown in Figure 4, the whole of the plurality of thick-walled portions 40 and the plurality of thin-walled portions 42 is provided to protrude outward in the radial direction relative to the neck portion 20 when viewed in the axial direction Z. However, portions of the thin-walled portions 42 may not protrude relative to the neck portion 20 outward in the radial direction. For example, in a circumferential direction of the body portion 24, an outer surface of a middle portion of each thin-walled portion 42 (a middle portion between a thick-walled portion 40 and another thick-walled portion 40) may be flush with an outer peripheral face of the neck portion 20. The same holds true for the embodiments described later.

As shown in Figure 1, an end face 24a of the body portion 24 on the one side in the axial direction Z serves as a supporting face for supporting the compressor 200 (attaching leg 202). In the following, the end face 24a will be referred to as a supporting face 24a. As shown in Figure 2, in this embodiment, the supporting face 24a is formed to be flat. The supporting face 24a includes a plurality of wide portions 40a and a plurality of narrow portions 42a. The wide portion 40a is an end face of the thick-walled portion 40, and the narrow portion 42a is an end face of the thin-walled portion 42. When viewed in the axial direction Z, the length of protrusion of the narrow portion 42a relative to the neck portion 20 in the radial direction is smaller than the length of protrusion of the wide portion 40a relative to the neck portion 20 in the radial direction.

As shown in Figures 2 and 4, a tip end portion 40b of the thick-walled portion 40 in the radial direction has a rounded shape (arc shape) when viewed in the axial direction Z. In this embodiment, when viewed in the axial direction Z, the body portion 24 has the shape of a rectangle with each vertex curved to form a rounded face. In this embodiment, when viewed in the axial direction Z, the body portion 24 has the shape of a square with each vertex curved to form a rounded face. In this embodiment, when viewed in the axial direction Z, the body portion 24 is shaped to contact the common imaginary circle 26 at the tip end portions 40f of the plurality of thick-walled portions 40. Furthermore, when viewed in the axial direction Z, each tip end portion 40b is shaped to have a rounded face that conforms to a portion of the imaginary circle 26.

### (Operations and Effects)

With the vibration isolation member 12 according to this embodiment, the body portion 24 has the plurality of thick-walled portions 40 and the plurality of thin-walled portions 42. By increasing the amount of protrusion of each thick-walled portion 40 relative to the neck portion 20, the diameter of the imaginary circle 26 circumscribing the body portion 24 can be increased. In this case, the compressor 200 can be stably supported by the body portion 24, and a sufficient vibration isolation function can be achieved. On the other hand, since the thin-walled portions 42 are provided between the adjacent thick-walled portions 40, the volume of the body portion 24 can be reduced. That is, the vibration isolation member 12 according to this embodiment can maintain the vibration isolation function while having a reduced volume.

Note that the vibration isolation member 12 can be produced in a mold having a plurality of cavities each conforming to the shape of the vibration isolation member 12, for example. In this embodiment, when viewed in the axial direction Z, the outer edge of the thin-walled portion 42 is located on the inner side than the imaginary circle 26 circumscribing the body portion 24 (the plurality of thick-walled portions 40). In this case, compared with the case where a plurality of cavities each conforming to a body portion having a circular shape is formed in a mold, the plurality of cavities for forming the body portions 24 can be arranged at smaller intervals. Therefore, not only the cost of the material of the vibration isolation member 12 can be reduced, the number of vibration isolation members 12 produced in one mold can also be increased. Therefore, the vibration isolation member 12 can be efficiently produced at lower cost.

Furthermore, with the vibration isolation member 12 according to this embodiment, the plurality of thick-walled portions 40 and the plurality of thin-walled portions 42 are alternately arranged at intervals of 45° around the axis of the body portion 24. Therefore, the vibration transmission properties can be prevented from varying with the direction of the vibration transmitted to the vibration isolation member 12. For example, even when vibrations in different directions are transmitted to the vibration isolation member 12 as shown by the arrows X1 and X2 in Figure 4, the vibration transmission properties can be prevented from varying. Furthermore, with the vibration isolation member 12 according to this embodiment, the body portion 24 is formed to contact the imaginary circle 26 at the tip end portions 40b of the plurality of thick-walled portions 40 when viewed in the axial direction Z. Since the body portion 24 is configured in this way, it can be ensured that the body portion 24 supports the compressor 200 with a sufficient area. Therefore, the compressor 200 can be more stably supported.

In addition, with the vibration isolation member 12 according to this embodiment, the tip end portion 40b of each thick-walled portion 40 is curved to form a rounded face. In this case, compared with the tip end portion of the thick-walled portion has a pointed shape, the vibration isolation member 12 can be more easily removed from the mold. In addition, since the width of the tip end portion 40b in the circumferential direction of the body portion 24 is increased, the compressor 200 can be more stably supported. Note that although not shown in the drawings, the tip end portion 40b of the thick-walled portion 40 may be shaped to form a chamfer face (shaped to be straight). In this case, the same effects are achieved. Note that when each tip end portion 40b is shaped to form a chamfer face, again, the body portion 24 is shaped to contact the common imaginary circle at the tip end portions 40b of the plurality of thick-walled portions 40 when viewed in the axial direction Z, for example.

In addition, in this embodiment, the jaw portion 22 is provided on the one side of the neck portion 20 in the axial direction Z. Therefore, when the vibration isolation member 12 supports the compressor 200, the attaching leg 202 can be prevented from coming off the vibration isolation member 12 in the upward direction. Therefore, the compressor 200 can be more stably supported. This holds true for the embodiments described later.

### (Other Embodiments)

Although a case where the body portion 24 has a substantially rectangular shape when viewed in the axial direction Z has been described in the above embodiment, the shape of the body portion is not limited to the example described above. Figure 6 is an exterior perspective view of a vibration isolation member according to another embodiment of the present invention, and Figure 7 is a front view of the vibration isolation member. Furthermore, Figure 8 is a cross-sectional view of the vibration isolation member taken along the line A-A in Figure 7.

As shown in Figures 6 to 8, a vibration isolation member 13 according to this embodiment has a neck portion 30, a jaw portion 32 provided on one side of the neck portion 30 in an axial direction Z of the vibration isolation member 13, and a body portion 34 provided on another side of the neck portion 30 in the axial direction Z. Note that in Figure 8, the alternate long and short dash line indicates the position of an outer edge of the neck portion 30 viewed in the axial direction Z, and the alternate long and two short dashes line indicates an imaginary circle 36 circumscribing the body portion 34. In this embodiment, the imaginary circle 36 is a circle centered on the center of the through-hole 13a described later viewed in the axial direction Z.

As with the vibration isolation member 12 described above, in the vibration isolation member 13, a through-hole 13a penetrating the vibration isolation member 13 in an axial direction Z is formed. Note that the neck portion 30 and the jaw portion 32 have the same configurations as the neck portion 20 and the jaw portion 22 of the vibration isolation member 12 described above, and descriptions thereof will be omitted.

As shown in Figures 6 and 8, the body portion 34 has a plurality of thick-walled portions 46 and a plurality of thin-walled portions 48. In this embodiment, when viewed in the axial direction Z, the plurality of thick-walled portions 46 and the plurality of thin-walled portions 48 are provided in portions of the body portion 34 that protrude outward in the radial direction relative to the neck portion 30. When viewed in the axial direction Z, the length of protrusion of the thin-walled portion 48 relative to the neck portion 30 in the radial direction is smaller than the length of protrusion of the thick-walled portion 46 relative to the neck portion 30 in the radial direction. The plurality of thick-walled portions 46 and the plurality of thin-walled portions 48 are alternately arranged around the axis of the body portion 34. In this embodiment, the plurality of thick-walled portions 46 and the plurality of thin-walled portions 48 are provided at intervals of 60° about the axis of the body portion 34.

In this embodiment, again, an end face 34a of the body portion 34 on the one side in the axial direction Z serves as a supporting face for supporting an attaching leg 202 (see Figure 1). In the following, the end face 34a will be referred to as a supporting face 34a. As shown in Figure 6, in this embodiment, the supporting face 34a is formed to be flat. The supporting face 34a includes a plurality of wide portions 46a and a plurality of narrow portions 48a. The wide portion 46a is an end face of the thick-walled portion 46, and the narrow portion 48a is an end face of the thin-walled portion 48. When viewed in the axial direction Z, the length of protrusion of the narrow portion 48a relative to the neck portion 30 in the radial direction is smaller than the length of protrusion of the wide portion 46a relative to the neck portion 30 in the radial direction.

As shown in Figures 6 and 8, in this embodiment, a tip end portion 46b of the thick-walled portion 46 in the radial direction has a rounded shape (arc shape) when viewed in the axial direction Z. In this embodiment, when viewed in the axial direction Z, the body portion 34 has the shape of a triangle with each vertex curved to form a rounded face. In this embodiment, when viewed in the axial direction Z, the body portion 34 has the shape of an equilateral triangle with each vertex curved to form a rounded face. In this embodiment, when viewed in the axial direction Z, the body portion 34 is shaped to contact a common imaginary circle 36 at the tip end portions 46b of the plurality of thick-walled portions 46. Furthermore, when viewed in the axial direction Z, each tip end portion 46b is shaped to have a rounded face that conforms to a portion of the imaginary circle 36.

### (Operations and Effects)

With the vibration isolation member 13 according to this embodiment, again, the body portion 34 has the plurality of thick-walled portions 46 and the plurality of thin-walled portions 48. By increasing the amount of protrusion of each thick-walled portion 46 relative to the neck portion 30, the diameter of the imaginary circle 36 circumscribing the body portion 34 can be increased. In this case, the compressor 200 can be stably supported by the body portion 34, and a sufficient vibration isolation function can be achieved. On the other hand, since the thin-walled portions 48 are provided between the adjacent thick-walled portions 46, the volume of the body portion 34 can be reduced. Therefore, the vibration isolation member 13 according to this embodiment can also maintain the vibration isolation function while having a reduced volume.

Furthermore, in this embodiment, again, when viewed in the axial direction Z, the outer edge of the thin-walled portion 48 is located on the inner side than the imaginary circle 36 circumscribing the body portion 34 (the plurality of thick-walled portions 46). Therefore, compared with the case where a plurality of cavities each conforming to a body portion having a circular shape is formed in a mold, the plurality of cavities for forming the body portions 34 can be arranged at smaller intervals.

Furthermore, with the vibration isolation member 13 according to this embodiment, the plurality of thick-walled portions 46 and the plurality of thin-walled portions 48 are alternately arranged at intervals of 60° around the axis of the body portion 34. Therefore, the vibration transmission properties can be prevented from varying with the direction of the vibration transmitted to the vibration isolation member 13. For example, even when vibrations in different directions are transmitted to the vibration isolation member 13 as shown by the arrows X3 and X4 in Figure 8, the vibration transmission properties can be prevented from varying. Furthermore, with the vibration isolation member 13 according to this embodiment, the body portion 34 is formed to contact the imaginary circle 36 at the tip end portions 46b of the plurality of thick-walled portions 46 when viewed in the axial direction Z. Since the body portion 34 is configured in this way, it can be ensured that the body portion 34 supports the compressor 200 with a sufficient area. Therefore, the compressor 200 can be more stably supported.

In addition, with the vibration isolation member 13 according to this embodiment, again, the tip end portion 46b of each thick-walled portion 46 is curved to form a rounded face. Thus, the vibration isolation member 13 can be more easily removed from the mold. In addition, since the width of the tip end portion 46b in the circumferential direction of the body portion 34 is increased, the compressor 200 can be more stably supported. Note that although not shown in the drawings, the tip end portion 46b of the thick-walled portion 46 may be shaped to form a chamfer face (shaped to be straight). In this case, the same effects are achieved. Note that when each tip end portion 46b is shaped to form a chamfer face, again, the body portion 34 is shaped to contact the common imaginary circle at the tip end portions 46b of the plurality of thick-walled portions 46 when viewed in the axial direction Z, for example.

### (Variations)

Although a case where the body portion 24 has the shape of a rectangle with each vertex shaped to form a rounded face or a chamfer face when viewed in the axial direction Z has been described in one of the embodiments described above, the body portion 24 may have a rectangular shape when viewed in the axial direction Z. For example, the body portion 24 may have a square shape when viewed in the axial direction Z. In addition, although a case where the body portion 34 has the shape of a triangle with each vertex shaped to form a rounded face or a chamfer face when viewed in the axial direction Z has been described in another one of the embodiments described above, the body portion 34 may have a triangular shape when viewed in the axial direction Z. For example, the body portion 34 may have the shape of an equilateral triangle when viewed in the axial direction Z.

Although cases where the vibration isolation members 12 and 13 have the jaw portions 22 and 32 have been described in the embodiments described above, the jaw portion does not need to be provided. However, the vibration isolation member preferably has the jaw portion from the viewpoint of preventing the compressor 200 (attaching legs 202) from coming off the vibration isolation member in the upward direction with reliability.

### EXAMPLE

In the following, effects of the vibration isolation members according to the present invention will be described with reference to examples. However, the present invention is not limited to the examples described below.

The vibration transmission properties (vibration isolation properties) of the vibration isolation member 12 according to the example 1 shown in Figures 2 to 5, the vibration isolation member 13 according to the example 2 shown in Figures 6 to 8, and the vibration isolation member 100 according to the comparative example shown in Figure 9 were evaluated. The vibration isolation member 12, the vibration isolation member 13 and the vibration isolation member 100 were made of the same material (elastic material). In addition, the vibration isolation members 12, 13 and 100 according to the examples 1 and 2 and the comparative example had an equal height (dimension in the axial direction) and equal dimensions of the neck portions and the jaw portions. In addition, the diameters of the imaginary circles 26 and 36 (see Figures 4 and 8) circumscribing the body portions 24 and 34 of the vibration isolation members 12 and 13 according to the examples 1 and 2 and the diameter of the body portion 106 (see Figure 9) of the vibration isolation member 100 according to the comparative example were also equal.

The sinusoidal sweep vibration test was performed for the vibration isolation members 12, 13 and 100 according to the examples 1 and 2 and the comparative example, and the resonance frequency and the maximum value of the vibration transmissivity (the vibration transmissivity during resonance) were measured. In the vibration test for the example 1, three vibration isolation members 12 were prepared, and a weight member (7.5 kg) was supported on the stage of the vibration testing machine by the three vibration isolation members 12. Vibrations in the vertical direction (the axial direction Z) and horizontal directions (the directions indicated by the arrows X1 and X2 in Figure 4, referred to as horizontal directions X1 and X2 hereinafter) were applied to the stage, and the vibration (acceleration) transmitted from the stage to the weight member via the three vibration isolation members 12 was measured. The vibration transmitted to the weight member was measured with a vibration meter attached to the weight member. Note that as shown in Figure 4, when viewed in the axial direction Z of the vibration isolation member 12, the horizontal direction X1 is a direction perpendicular to an outer face 42b of a thin-walled portion 42. The horizontal direction X2 is a direction at an angle of 45° relative to the horizontal direction X1. The conditions for the vibration applied to the stage during the test were as follows: the acceleration was 0.3 G, the frequency was 5 to 200 Hz, and the sweep rate was 2 oct/min.

In the vibration test for the example 2, similarly, a weight member (7.5 kg) was supported on the stage of the vibration testing machine by three vibration isolation members 13. However, in the vibration test for the example 2, vibrations in the vertical direction (the axial direction Z) and horizontal directions (the directions indicated by the arrows X3 and X4 in Figure 8, referred to as horizontal directions X3 and X4 hereinafter) were applied to the stage, and the vibration (acceleration) transmitted from the stage to the weight member via the three vibration isolation members 13 was measured. Note that as shown in Figure 8, when viewed in the axial direction Z of the vibration isolation member 13, the horizontal direction X3 is a direction perpendicular to an outer face 48b of a thin-walled portion 48. The horizontal direction X4 is a direction at an angle of 60° relative to the horizontal direction X3. The conditions for the vibration applied to the stage during the test were the same as those for the example 1.

In the vibration test for the comparative example, similarly, three vibration isolation members 100 were prepared, and the vibration test was performed under the same conditions as those for the examples 1 and 2. Concerning the horizontal direction, however, the vibration test was performed for only one direction.

Tables 1 to 3 below show the vibration test results for the examples 1 and 2 and the comparative example. Note that the vibration transmissivity (dB) shown in Tables 1 to 3 are values calculated according to the following formula, where G_{I} denotes the acceleration applied to the stage and G_{O} denotes the acceleration measured by the vibration meter. Tables 1 to 3 below show the maximum values of the vibration transmissivity calculated in the vibration tests. A vibration transmissivity greater than 0 means that the amplitude of the vibration transmitted from the stage to the weight member increased, and a vibration transmissivity smaller than 0 means that the amplitude of the vibration transmitted from the stage to the weight member decreased.$Vibration transmissivity \left(dB\right) = 20 {log}_{10} \left({G}_{O}{/ G}_{I}\right)$

### [Table 1]

**Table 1**

| Example 1 | Horizontal direction X1 | Horizontal direction X2 | Vertical direction |
|---|---|---|---|
| Resonance frequency (Hz) | 12.8 | 12.7 | 41.8 |
| Vibration transmissivity (dB) | 5.9 | 6.0 | 3.9 |

### [Table 2]

**Table 2**

| Example 2 | Horizontal direction X3 | Horizontal direction X4 | Vertical direction |
|---|---|---|---|
| Resonance frequency (Hz) | 12.5 | 12.7 | 43.0 |
| Vibration transmissivity (dB) | 5.7 | 5.8 | 3.9 |

### [Table 3]

**Table 3**

| Comparative example | Horizontal direction | Vertical direction |
|---|---|---|
| Resonance frequency (Hz) | 13.3 | 43.2 |
| Vibration transmissivity (dB) | 5.9 | 3.9 |

As shown in Tables 1 to 3, in the vibration tests for the examples 1 and 2 and the comparative example, the resonance frequencies and the maximum values of the vibration transmissivities for the vibrations in the horizontal directions were not significantly different. In the vibration tests for the examples 1 and 2 and the comparative example, the resonance frequencies and the maximum values of the vibration transmissivities for the vibrations in the vertical directions were also not significantly different. This result shows that the vibration isolation members 12 and 13 according to the examples 1 and 2 and the vibration isolation member 100 according to the comparative example have similar vibration transmission properties (vibration isolation properties) for the vibrations in the horizontal direction and the vertical direction (axial direction Z). This shows that the vibration isolation members 12 and 13 according to the present invention can maintain the vibration isolation function while having a reduced volume.

Furthermore, as shown in Table 1, the resonance frequency and the maximum value of the vibration transmissivity were not significantly different between the case where the vibration in the horizontal direction X1 was applied to the vibration isolation member 12 according to the example 1 and the case where the vibration in the horizontal direction X2 was applied. Similarly, as shown in Table 2, the resonance frequency and the maximum value of the vibration transmissivity were not significantly different between the case where the vibration in the horizontal direction X3 was applied to the vibration isolation member 13 according to the example 2 and the case where the vibration in the horizontal direction X4 was applied. These results show that the vibration isolation members 12 and 13 according to the present invention can properly exert the vibration isolation function regardless of the direction of attachment to the compressor 200 (attaching leg 202). More specifically, since the plurality of thick-walled portions and the plurality of thin-walled portions are alternately arranged at intervals of 45° or 60° around the axis of the body portion, and the body portion is configured to contact an imaginary circle at the tip end portions of the plurality of thick-walled portions when viewed in the axial direction of the vibration isolation member, the vibration isolation member can properly exert the vibration isolation function regardless of the direction of attachment of the vibration isolation member to the compressor.

### INDUSTRIAL APPLICABILITY

According to the present invention, the vibration isolation function of the vibration isolation member can be maintained while reducing the volume.

### REFERENCE SIGNS LIST

- 10: support structure
- 12, 13: vibration isolation member
- 20, 30: neck portion
- 22, 32: jaw portion
- 24, 34: body portion
- 40, 46: thick-walled portion
- 42, 48: thin-walled portion
- 200: compressor
- 300: base

## Claims

1. A vibration isolation member made of an elastic material and having a hollow shape with a through-hole penetrating the vibration isolation member in an axial direction formed therein, comprising:
a body portion having a tubular shape; and
a neck portion having a tubular shape provided on one side of the body portion in the axial direction,
wherein when viewed in the axial direction, the body portion has a plurality of thick-walled portions provided to protrude in a radial direction of the through-hole relative to the neck portion and a plurality of thin-walled portions, a length of protrusion of the thin-walled portions relative to the neck portion in the radial direction being smaller than a length of protrusion of the thick-walled portions relative to the neck portion in the radial direction, and
when viewed in the axial direction, the plurality of thick-walled portions and the plurality of thin-walled portions are alternately arranged around an axis of the body portion.

2. The vibration isolation member according to Claim 1, wherein when viewed in the axial direction, the plurality of thick-walled portions and the plurality of thin-walled portions are alternately arranged at intervals of 45° or 60° around the axis of the body portion.

3. The vibration isolation member according to Claim 2, wherein when viewed in the axial direction, the body portion is in contact with an imaginary circle at tip end portions of the plurality of thick-walled portions in the radial direction.

4. The vibration isolation member according to any one of Claims 1 to 3, wherein when viewed in the axial direction, tip end portions of the thick-walled portions in the radial direction are shaped to form a rounded face or a chamfer face.

5. The vibration isolation member according to any one of Claims 1 to 4, wherein when viewed in the axial direction, the body portion has a shape of a rectangle or a rectangle with each vertex shaped to form a rounded face or a chamfer face.

6. The vibration isolation member according to any one of Claims 1 to 4, wherein when viewed in the axial direction, the body portion has a shape of a triangle or a triangle with each vertex shaped to form a rounded face or a chamfer face.

7. The vibration isolation member according to any one of Claims 1 to 6, further comprising:
a jaw portion having an annular shape, the jaw portion being provided on one side of the neck portion in the axial direction and protruding relative to the neck portion in the radial direction.

8. A support structure of a compressor for supporting the compressor on a base, the compressor having a plurality of attaching legs,
wherein the plurality of attaching legs is supported on the base by a plurality of the vibration isolation members according to any one of Claims 1 to 7.
